(19) Europäisches Patentamt
European Patent Office
Office européen des brevets

(11) EP 1 460 039 A1

(12) EUROPEAN PATENT APPLICATION
published in accordance with Art. 158(3) EPC

(43) Date of publication:
22.09.2004 Bulletin 2004/39

(51) Int Cl.⁷: **C01B 17/22**, C25B 1/16,
C08G 75/02

(21) Application number: 02786119.4

(22) Date of filing: 17.12.2002

(86) International application number:
PCT/JP2002/013177

(87) International publication number:
WO 2003/055798 (10.07.2003 Gazette 2003/28)

(84) Designated Contracting States:
AT BE BG CH CY CZ DE DK EE ES FI FR GB GR
IE IT LI LU MC NL PT SE SI SK TR

(30) Priority: 27.12.2001 JP 2001397493
15.07.2002 JP 2002205111

(71) Applicant: IDEMITSU PETROCHEMICAL CO.,
LTD.
Tokyo 130-0015 (JP)

(72) Inventors:
• SENGA, Minoru
  Ichihara-shi, Chiba 299-0107 (JP)
• MATSUI, Junji
  Ichihara-shi, Chiba 299-0107 (JP)
• KAKIMOTO, Hideaki
  Ichihara-shi, Chiba 299-0107 (JP)

(74) Representative: Prop, Gerrit
Brucknerstrasse 20
40593 Düsseldorf (DE)

(54) **METHOD FOR REPRODUCING LITHIUM SULFIDE AND METHOD FOR PRODUCING POLYARYLENE SULFIDE**

(57) A method for reproducing lithium sulfide, including the steps of reacting lithium halide generated as a byproduct during the production of a polyarylene sulfide by a reaction between lithium sulfide and a halogenated aromatic compound with sodium carbonate to generate lithium sulfide, isolating the lithium carbonate and reacting the lithium carbonate with a sulfur compound to generate the lithium sulfide. According to the above method, lithium sulfide having a less Na content can be reproduced from lithium halide generated as a byproduct during the production of a polyarylene sulfide.

Fig. 1

**EP 1 460 039 A1**

### Description

Technical Field

The present invention relates to a method for reproducing lithium sulfide from lithium halide generated as a byproduct during the production of a polyarylene sulfide, and particularly to a method for reproducing lithium sulfide containing less Na. Further, it relates to a method for producing a polyarylene sulfide in the presence of the lithium sulfide reproduced by the above reproduction method.

Related Art

The method for producing a polyarylene sulfide by using lithium sulfide as a sulfur source has characteristic features that ① formation of a polymer having a high molecular weight is easy, that ② continuous polymerization is possible and that ③ a washing step is simple, and the method attracts attention as an industrially valuable technique.

However, lithium chloride is generated as a byproduct with the formation of a polyarylene sulfide, and since the lithium chloride is expensive, it is required to recover Li and recycle it to a raw material system.

When a lithium sulfide as a raw material has a large Na content, Na comes to be included in a polyarylene sulfide obtained and causes various hindrances when the polyarylene sulfide is used for electric and electronic parts. For example, when the above polyarylene sulfide having a large content of included Na is used in an IC sealing agent, a printing board, or the like, it causes the corrosion of a wire and causes a decrease in electric insulation property.

As a method for recovering lithium chloride and reusing it as a raw material, the following methods are known.

① JP-A-06-025123, JP-A-07-196590, JP-A-07-330312 and JP-A-10-130005 (Idemitsu Petrochemical Co., Ltd.)
   The above publications describe methods in which an Na compound is reacted with lithium chloride and Li is recovered to a raw material system and reused. In these methods, however, a small amount of sodium chloride is included in an Li compound in the recovery of Li, and there is a problem that it finally adds to a residual metal content in a polyarylene sulfide as a product. Further, the process of Li recovery not only requires an Na compound as a chemical but also requires the step of disposing of sodium chloride.

② U.S. Patent 4451643 (Phillips Petroleum Company)
   In the above publication, the specification thereof describes that Li is recovered by electrolysis and recycled. However, no lithium sulfide is reproduced. Further, a polyarylene sulfide obtained by this method comes to have a relatively low molecular weight, and there can be obtained no polyarylene sulfide having a high molecular weight.

It is therefore an object of the present invention to provide a method for reproducing a lithium sulfide containing less Na from a lithium halide generated as a byproduct during the production of a polyarylene sulfide and a method for producing a polyarylene sulfide, in which the reproduced lithium sulfide is used.

Disclosure of the Invention

According to a first aspect of the present invention, there is provided a method for reproducing lithium sulfide, which comprises the steps of reacting lithium halide generated as a byproduct during the production of a polyarylene sulfide by a reaction between lithium sulfide and a halogenated aromatic compound, with a sodium carbonate to generate lithium carbonate, isolating the lithium carbonate, and reacting the lithium carbonate with a sulfur compound to generate the lithium sulfide.

Further, according to a second aspect of the present invention, there is provided a method for reproducing lithium sulfide, which comprises the steps of electrolyzing lithium halide generated as a byproduct during the production of a polyarylene sulfide by a reaction between lithium sulfide and a halogenated aromatic compound, to generate lithium hydroxide, and reacting the lithium hydroxide with a sulfur compound to generate the lithium sulfide.

Preferably, the content of included Na in the reproduced lithium sulfide is 0.13 mol or less per mole of sulfur.

According to a third aspect of the present invention, there is provided a method for producing a polyarylene sulfide by a reaction between lithium sulfide and a halogenated aromatic compound, which comprises the step of reacting a reproduced lithium sulfide obtained by the above reproduction method with a halogenated aromatic compound.

According to a fourth aspect of the present invention, further, there is provided a reproduced lithium sulfide having an included Na content of 0.13 mol or less per mole of sulfur, which is a product reproduced from lithium halide generated as a byproduct during the production of a polyarylene sulfide by a reaction between lithium sulfide and a halogenated aromatic compound.

Brief Description of Drawings

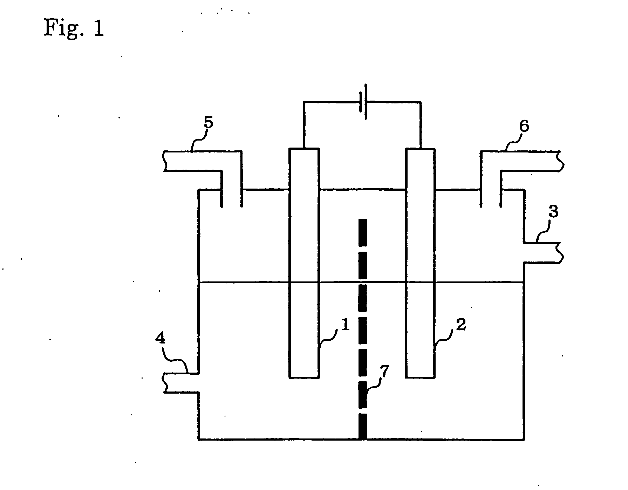

Fig. 1 is a schematic drawing of an electrolysis apparatus.

Preferred Embodiments of the Invention

The method for reproducing lithium sulfide ($Li_2S$) and the method for producing a polyarylene sulfide (PAS) will be explained below.

In the present invention, a polyarylene sulfide is produced from lithium sulfide and a halogenated aromatic compound. Of halogens, chlorine is particularly preferred. While the production using a chlorinated aromatic compound will be explained below for the convenience, the following explanation can be applied to the other halogens.

The method for producing a polyarylene sulfide, provided by the present invention, comprises the steps (1) to (3) represented by the following reaction schemes.

$$(1) \qquad Li_2S + Ar(Cl)_2 \rightarrow PAS + LiCl$$

$$(2) \qquad LiCl \rightarrow \text{reproduced } Li_2S$$

$$(3) \qquad \text{Reproduced } Li_2S + Ar(Cl)_2 \rightarrow PAS + LiCl$$

(1) represents the step of producing a polyarylene sulfide (PAS) by a reaction between lithium sulfide and a chlorinated aromatic compound ($Ar(Cl)_2$), (2) represents the step of generating reproduced lithium sulfide from lithium chloride generated as a byproduct in the (1), and (3) represents the step of reacting the reproduced lithium sulfide generated in the (2) with a chlorinated aromatic compound to produce a polyarylene sulfide (PAS).

In the production method of the present invention, a polyarylene sulfide can be produced by repeating the above steps (2) and (3).

(1) Step of producing a polyarylene sulfide by a reaction between lithium sulfide and a chlorinated aromatic compound

Preferably, the step of producing a polyarylene sulfide by a reaction between lithium sulfide and a chlorinated aromatic compound (to be referred to as "step (1)" hereinafter) includes the following steps (a) to (c).

(a) Step of charging a liquid or gaseous sulfur compound into a system where an aprotic organic solvent and either lithium hydroxide (LiOH) or lithium N-methylaminobutyrate (LMAB) are present.
(b) Step of dehydrating an obtained reaction product.
(c) Step of adjusting a sulfur content and then charging a chlorinated aromatic compound to subject it to polycondensation.

The step (1) may use lithium sulfide without generating any lithium sulfide by the steps (a) to (c). In this case, the above steps (a) and (b) and the adjustment of a sulfur content in the step (c) can be omitted.

(a) Step of charging a liquid or gaseous sulfur compound into a system where an aprotic organic solvent and either lithium hydroxide (LiOH) or lithium N-methylaminobutyrate (LMAB) are present

(i) Aprotic organic solvent

As an aprotic organic solvent for use in the present invention, generally, any one of aprotic polar organic compounds (e.g., an amide compound, a lactam compound, a urea compound, an organosulfur compound, a cyclic organic phosphorus compound, etc.) can be preferably used alone or as a solvent mixture.

Of these aprotic polar organic compounds, the above amide compound includes, for example, N,N-dimetehylformamide, N,N-diethylformamide, N,N-dimethylacetamide, N,N-diethylacetamide, N,N-dipropylacetamide and N, N-dimethylbezoic acid amide.

The above lactam compound includes, for example, N-alkylcaprolactams such as caprolactam, N-methylcaprolactam, N-ethylcaprolactam, N-isopropylcaprolactam, N-isobutylcaprolactam, N-n-propylcaprolactam, N-n-butylcaprolactam and N-cyclohexylcaprolactam, N-methyl-2-pyrrolidone (NMP), N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-pyrrolidone, N-methyl-2-piperidone, N-ethyl-2-piperidone, N-isopropyl-2-piperidone, N-methyl-6-methyl-2-piperidone and N-methyl-3-ethyl-2-piperidone.

Further, the above urea compound includes, for example, tetramethylurea, N,N'-dimethylethyleneurea and N,N'-dirnethylpropyleneurea.

Further, the above organosulfur compound includes, for example, dimethylsulfoxide, diethylsulfoxide, diphenylsulfone, 1-methyl-1-oxosulfolane, 1-ethyl-1-oxosulfolane and 1-phenyl-1-oxosulfolane. The above organic cyclic phosphorus compound includes, for example, 1-methyl-1-oxophosfolane, 1-n-propyl-1-oxophosfolane and 1-phenyl-1-oxophosfolane.

Any one of these aprotic polar organic compounds may be used alone or in the form of a mixture containing two or more members of these. Further, as the above aprotic organic solvent, any one of them may be used in the form of a mixture of one or more members of them with other solvent component that does not impair the object of the present invention.

Of the above various aprotic organic solvents, N-alkylcaprolactam and N-alkylpyrrolidone are preferred, and N-methyl-2-pyrrolidone is particularly preferred.

(ii) Preparation of system where LiOH or LMAB is present

The system where an aprotic organic solvent and either lithium hydroxide (LiOH) or lithium N-methylaminobutyrate (LMAB) are present means a system that is obtained by charging sodium hydroxide (NaOH) or the like into a site where lithium chloride and an aprotic organic solvent are present or lithium chloride, N-methyl-2-pyrrolidone (NMP), an aprotic organic solvent and water are present. The above preparation method will be specifically described.

① System where LiOH is present

For recovering Li ion present as LiCl in a reaction mixture, a hydroxide of an alkali metal other than lithium or a hydroxide of an alkaline earth metal, such as sodium hydroxide, potassium hydroxide or magnesium hydroxide is charged into a system. Of these, sodium hydroxide is preferred. Such a hydroxide is charged in such an amount that the amount of hydroxyl groups per mole of lithium ion is 0.90 to 1.1 mol, preferably 0.95 to 1.05 mol. When the above amount exceeds 1.1 mol, a large amount of a sulfur compound of an alkali metal other than lithium or a sulfur compound of an alkaline earth metal comes to be included in a non-lithium hydroxide precipitate when a sulfur compound is charged into the above system. When the above amount is less than 0.90 mol, lithium is lost. The reaction temperature in the above case is not specially limited. When a hydroxide of an alkali metal other than lithium or a hydroxide of an alkaline earth metal is charged in the form of an aqueous solution, generally, the temperature is room temperature to 230°C, preferably 65 to 150°C. When it is charged in the form of a solid, generally, the temperature is 60 to 230°C, preferably 90 to 150°C. When the reaction temperature is low, the solubility is low and the reaction rate is greatly decreased. When the reaction temperature is high, it goes beyond the boiling point of NMP, and it is required to carry out the reaction under elevated pressure, which is disadvantageous in view of a process. The reaction time period is not specially limited.

② System where LMAB is present

In this case, lithium chloride, N-methyl-2-pyrrolidone and a hydroxide of a (non-lithium) alkali metal excluding lithium are allowed to react. The non-lithium alkali metal hydroxide is supplied in the form of an aqueous solution, so that the reaction is carried out in a solvent mixture system containing the above aprotic organic solvent and water.

The non-lithium alkali metal hydroxide includes sodium hydroxide, potassium hydroxide, rubidium hydroxide, cesium hydroxide and a mixture containing one or more members of these. Of these, sodium hydroxide and potassium hydroxide are preferred, and sodium hydroxide is particularly preferred. The non-lithium alkali metal hydroxide such as sodium hydroxide is not limited to any pure hydroxide, and a non-lithium alkali metal hydroxide for general use in industry can be suitably used.

When NMP is used as an aprotic polar solvent and when NaOH is used as a non-lithium alkali metal hydroxide, the amount ratio thereof as NMP/NaOH in the reaction is adjusted to 1.05 to 30 (molar ratio), preferably 1.20 to 6.0 (molar ratio). Further, LiCl/NaOH is adjusted to 1.00 to 5 (molar ratio), preferably 1.00 to 1.5 (molar ratio). Further, water/NMP is adjusted to 1.6 to 16 (molar ratio), preferably 2.8 to 8.3 (molar ratio).

The reaction temperature and the reaction time period are generally preferably 80 to 200°C and approximately 0.1 to 10 hours.

(iii) Charging of liquid or gaseous sulfur compound

While the liquid or gaseous sulfur compound for use in the present invention is not specially limited, hydrogen sulfide can be suitably used. When hydrogen sulfide is used, it may be blown in at atmospheric pressure or under elevated pressure. The time period for the blowing is not specially limited, and generally, it is preferably approximately 10 to 180 minutes. The blowing rate is not specially limited, either, and generally, it is preferably approximately 10 to 1,000 cc/minute. The method of blowing hydrogen sulfide is not specially limited, either. For example, there may be employed a generally employed method in which a mixture containing lithium hydroxide and either an alkali metal chloride or an alkaline earth metal chloride in N-methyl-2-pyrrolidone is stirred, for example, it is stirred in a 500 ml separable flask made of glass with a disk turbine blade as a stirring blade at 300 to 700 rpm, and while the stirring is carried out, hydrogen sulfide is bubbled thereinto. In this case, water may be present.

When the liquid or gaseous sulfur compound is charged as described above, lithium hydroxide present in the system in the form of a solid is dissolved in a liquid portion in the system, and a non-lithium hydroxide solid substance alone remains in the system in the form of a solid.

Then, the non-lithium hydroxide solid substance remaining in the form of a solid, such as an alkali metal chloride or an alkaline earth metal chloride, may be separated. In this case, for example, there can be employed a known method such as filtering with a filter G4 made of glass or centrifugal separation. The filtration may be carried out under reduced pressure. While the temperature for the separation is not specially limited, generally, it is preferably selected from the range of 20 to 150°C.

(b) Step of dehydrating an obtained reaction product

While water in an amount equimolar to absorbed hydrogen sulfide is generated, it is preferred to remove water as much as possible for producing a polyarylene sulfide having a high molecular weight.

Although not specially limited, the dehydration procedure for use in the present invention includes, for example, a heating procedure.

While the heating temperature is determined depending upon the gas-liquid equilibrium relationship of NMP-water, generally, it is preferably 130°C to 205°C. By blowing nitrogen ($N_2$) simultaneously, the heating temperature can be set at 130°C or lower. Further, when the heating is carried out under reduced pressure, the temperature can be further decreased.

The dehydration can be carried out at any time so long as it is carried out before a chlorinated aromatic compound is charged. The dehydration is preferably carried out simultaneously with the blowing of hydrogen sulfide in that the number of devices per unit operation can be decreased.

(c) Step of adjusting a sulfur content and then charging a chlorinated aromatic compound to subject it to polycondensation.

In this step, the sulfur content of a reaction mixture obtained in the above step is adjusted by the procedure of removing sulfur therefrom, e.g., the procedure of removing hydrogen sulfide. That is, for carrying out the reaction of a chlorinated aromatic compound to be described later, preferably, the ratio of sulfur/lithium present in the system is adjusted to 1/2 or less (sulfur atom/Li atom molar ratio), and the ratio is more preferably controlled to be 1/2.

When the above ratio is greater than 1/2, the reaction does not easily proceed, so that it is difficult to generate a polyarylene sulfide. While the method of the above control is not specially limited, for example, the sulfur compound, such as hydrogen sulfide, blown for the separation of the alkali metal chloride or alkaline earth metal chloride is removed by carrying out nitrogen bubbling, etc., in a liquid portion within the system after the alkali metal chloride or alkaline earth metal chloride is separated, whereby the total amount of sulfur present in the system can be adjusted. In this case, the system may be heated. Further, a lithium salt such as lithium hydroxide or lithium N-methylaminobutyrate (LMAB) may be added into the system for the above controlling.

Then, a chlorinated aromatic compound is charged into the system to allow it to react, whereby a polyarylene sulfide is produced.

While the chlorinated aromatic compound for use in the present invention is not specially limited, examples thereof include dichlorobenzenes such as m-dichlorobenzene and p-dichlorobenzene; alkyl-substituted dichlorobenzenes or cycloalkyl-substituted dichlorobenzenes such as 2,3-dichlorotoluene, 2,5-dichlorotoluene, 2,6-dichlorotoluene, 3,4-dichlorotoluene, 2,5-dichloroxylene, 1-ethyl-2,5-dichlorobenzene, 1,2,4,5-tetramethyl-3,6-dichlorobenzene, 1-n-hexyl-2,5-dichlorobenzene and 1-cyclohexyl-2,5-dichlorobenzene; aryl-substituted dichlorobenzenes such as 1-phenyl-2,5-dichlorobenzene, 1-benzyl-2,5-dichlorobenzene and 1-p-toluyl-2,5-dichlorobenzene; dichlorobiphenyls such as 4,4'-dichlorobiphenyl; and dichloronaphthalenes such as 1,4-dichloronaphthalene, 1,6-dichloronaphthalene and 2,6-dichloronaphthalene. Of these, dichlorobenzenes are preferred, and dichlorobenzenes containing 50 mol% or more of p-dichlorobenzene are particularly preferred.

As a reactor, for example, a 10-liter autoclave made of stainless steel can be selected. The polymerization temperature is preferably 220 to 260°C, and the polymerization time period is preferably 1 to 6 hours. The amount of the chlorinated aromatic compound to be charged is preferably selected so as to attain a range of the chlorinated aromatic compound/sulfur present in the system which range is 0.9 to 1.2 (molar ratio), and more preferably, so as to attain the range that is 0.95 to 1.15. The post-treatment can be carried out by a generally employed method. For example, after cooling, a precipitate is separated by centrifugal separation or filtering, and an obtained polymer can be purified by washing it repeatedly with an organic solvent, water, etc., at an elevated temperature or room temperature. The above washing may be effected while the polymer is in a solid state, or may be effected by so-called melt washing in which the polymer is converted to a liquid.

(2) Step of generating reproduced lithium sulfide from lithium chloride generated as a byproduct

This step is the step of generating a reproduced lithium sulfide from lithium chloride generated as a byproduct in the above step (1) (to be referred to as "step (2)" hereinafter). Specific examples of the step (2) include a method of reacting lithium chloride with sodium carbonate and a method of electrolyzing lithium chloride.

(i) Method of reacting lithium chloride with sodium carbonate

In this method, lithium sulfide is reproduced from lithium carbonate obtained by reacting the lithium chloride generated as a byproduct with sodium carbonate. This reproduction method includes the following steps (a) to (c) represented by the following reaction schemes.

$$(a) \qquad 2LiCl + Na_2CO_3 \rightarrow Li_2CO_3 + 2NaCl$$

$$(b) \qquad Li_2CO_3 + NaCl \rightarrow Li_2CO_3$$

$$(c) \qquad Li_2CO_3 + \text{sulfur compound} \rightarrow \text{reproduced } Li_2S$$

(a) represents the step of reacting lithium chloride with sodium carbonate to generate lithium carbonate, (b) represents the step of separating lithium carbonate from a mixture of lithium carbonate with sodium chloride, and (c) represents the step of reacting lithium carbonate with a sulfur compound to generate a reproduced lithium sulfide. Each step will be explained below.

(a) Step of reacting lithium chloride with sodium carbonate to generate lithium carbonate

While the reaction condition for the step of reacting lithium chloride with sodium carbonate to generate lithium carbonate (to be referred to as "step (a)" hereinafter) is not specially limited, the reaction molar ratio as lithium chloride/ sodium carbonate is preferably 1.5 to 2.5, more preferably 1.75 to 2.25. The reaction time period is preferably 0.05 to 5 hours, more preferably 0.1 to 1 hour. The reaction temperature is preferably 0 to 50°C, more preferably 5 to 40°C.

(b) Step of separating lithium carbonate from a mixture of lithium carbonate with sodium chloride

While the separation means for use in the step of separating lithium carbonate from a mixture of lithium carbonate with sodium chloride (to be referred to as "step b" hereinafter) is not specially limited, examples thereof include washing with water, filtering, centrifugal separation, and the like. The content of Na included in the lithium carbonate separated in this step per mole of lithium carbonate is preferably 0.13 mol or less, more preferably 0.1 mol or less, particularly preferably 0.05 mol or less. Most preferably, no Na is included.

(c) Step of reacting lithium carbonate with a sulfur compound to generate a reproduced lithium sulfide

The sulfur compound for use in the step of reacting lithium carbonate with a sulfur compound to generate a reproduced lithium sulfide (to be referred to as "step (c)" hereinafter) is not specially limited. The sulfur compound includes, for example, hydrogen sulfide. When hydrogen sulfide is used as a sulfur compound, this step is represented by the following reaction schemes (d) and (e).

$$\text{(d) } Li_2CO_3 + 2H_2S \rightarrow 2LiSH + H_2O + CO_2$$

$$\text{(e) } 2LiSH \rightarrow Li_2S + H_2S$$

In this case, when the reaction temperature is adjusted to 20 to 150°C, the reaction (d) proceeds, and then, when the reaction temperature is adjusted to 130 to 205°C, the reaction (e) proceeds.

The reaction molar ratio as lithium carbonate/sulfur compound in the step (d) is preferably 0.4 to 0.6, more preferably 0.45 to 0.55.

The above steps (a) to (c) are preferably carried out in the aforesaid aprotic organic solvent.

(ii) Method of electrolyzing lithium chloride

In this method, LiOH obtained by electrolyzing the lithium chloride generated as a byproduct in the above step (1) is used to reproduce $Li_2S$. This reproduction method obviates the step of treating NaCl, so that the reaction process can be more simplified. The reproduction method includes the steps (f) and (g) represented by the following reaction schemes.

$$\text{(f) } LiCl \rightarrow LiOH$$

$$\text{(g) } LiOH + \text{sulfur compound} \rightarrow Li_2S$$

(f) represents the step of electrolyzing lithium chloride to generate lithium hydroxide, and (g) represents the step of reacting the lithium hydroxide generated in (f) with a sulfur compound to generate a reproduced lithium sulfide. Each step will be explained below.

(f) Step of electrolyzing lithium chloride to generate lithium hydroxide

In this step, the electrolysis condition is not specially limited. Chlorine is generated on an anode plate, and LiOH is generated on a cathode plate.

(g) Step of reacting lithium hydroxide with a sulfur compound to generate a reproduced lithium sulfide

This step can employ reactions conditions, etc., similar to those in the steps (a) to (c) of the foresaid step (1).

The thus-reproduced lithium sulfide has a remarkably small Na content. The content of Na included in a polyarylene sulfide product produced using it can be therefore decreased, so that products can be improved in quality.

Preferably, the content of Na included in the reproduced lithium sulfide per mole of sulfur is 0.13 mol or less.

The content of Na included in the reproduced lithium sulfide per mole of sulfur is more preferably 0.10 mol or less, particularly preferably 0.05 mol or less, and most preferably, no Na is contained.

The content of the included Na can be measured by ion chromatography, or the like.

(3) Step of producing a polyarylene sulfide (PAS) by a reaction between the reproduced lithium sulfide and a chlorinated aromatic compound

This step is the step of reacting the reproduced lithium sulfide obtained in the above step (2) with a chlorinated aromatic compound to produce a polyarylene sulfide.

This step can employ production conditions, etc., similar to those in the step (c) in the aforesaid step (1).

The polyarylene sulfide obtained in this step has a high molecular weight, and further, concerning the content of residual salts contained therein, the content of Li is preferably 100 ppm or less, more preferably 10 ppm or less, and the content of Na is preferably 100 ppm or less, more preferably 10 ppm. These residual salts can be measured for contents by ashing the polyarylene sulfide by calcining and measuring it with an ion chromatograph, and the like.

Examples

[Example 1]

<Method of reproducing Li$_2$S>

An LiCl solution [A] (contents: LiCl 12 % by weight, NMP 88 % by weight) was prepared from a recovery solution that was from the production of a polyarylene sulfide (PPS) from Li$_2$S and p-dichlorobenzene (PDCB). A 15-L autoclave was charged with 10 kg of the LiCl solution [A] (28.20 mol as LiCl), and the solution was concentrated under heat at a reduced pressure of 200 torr. N-Methylpyrrolidone (NMP) in an amount of 8.5 kg was distilled off as a main component. A residue remaining in the autoclave was taken out, 4 kg of water was added, and the mixture was stirred at 50°C to dissolve the residue therein. A solid content was removed by filtering, and to a filtrate was added 20 wt% sodium carbonate in an amount of 7,500 g (14.15 mol as Na$_2$CO$_3$). The thus-obtained white precipitate was filtered, followed by repeated washing with a large amount of water and filtering. The precipitate was vacuum-dried at 100°C to give 1,020 g of a white powder. The white powder was subjected to IR spectrum and metal analysis to show that it was Li$_2$CO$_3$. The content of Na included therein was 10 ppm or less.
A 10-L autoclave was charged with 1,000 g (13.53 mol) of Li$_2$CO$_3$ obtained by the above method and 4,000 g of NMP, and hydrogen sulfide was blown into the system at 130°C at a rate of 2 L/minute for 5 hours and 30 minutes. The content therein was analyzed to show a 100 % conversion to LiSH. The content was heated up to 205°C as it was, followed by a dehydrating and desulfurizing reaction at 205°C for 4 hours, to give 4,430 g of a slurry [B] containing Li$_2$S as a main component. The slurry [B] had an Li$_2$S content of 12.58 mol and a lithium N-methylaminobutyrate content of 1.90 mol. In the slurry [B], no NaCL was detected.

<Polymerization-washing>

A 10-L autoclave was charged with 3,521 g (equivalent to 10 mol as Li$_2$S) of the slurry [B] prepared by the above method, 10 mol (1,470 g) of PDCB, 6 mol (108.1 g) of water and 1,300 g of NMP, and the mixture was allowed to react at 260°C for 3 hours. The reaction mixture was cooled to 100°C, and a liquid phase was separated to give a polymer <II> as a precipitate.
A 10-L autoclave reactor was charged again with the thus-obtained polymer <II>, 4,000 g of NMP, 1,000 g of water and 13.1 g (0.2 mol) of NH$_4$Cl, and the mixture was temperature-increased up to 260°C and washed for 30 minutes. A reaction mixture was cooled to 100°C, and a liquid phase was separated to give a polymer <III> as a precipitate. Then, the polymer <III> was subjected to a similar washing procedure once without adding NH$_4$Cl, to give a polymer <IV>.
The polymer <IV> was vacuum-dried to give 970 g of PPS. PPS had a molecular weight, as η$_{inh}$, of 0.22, and as residual salts, the content of Li was 10 ppm, and no Na was contained.

[Example 2]

<Method of reproducing Li$_2$S>

4,450 Grams of a slurry [C] containing Li$_2$S as a main component was obtained in the same manner as in Example 1 except that a white precipitate obtained by adding 20 wt% of sodium carbonate in an amount of 7,500 g (14.15 mol as Na$_2$CO$_3$) was filtered and directly used as a raw material without washing it with a large amount of water in Example 1. The slurry [C] contained 12.86 mol of Li$_2$S and 2.57 mol of lithium N-methylaminobutyrate. In the slurry [C], the content of Na was 0.10 mol per mole of Li$_2$S.

<Polymerization-washing>

Polymerization and washing were carried out in the same manner as in Example 1 except that the slurry [C] prepared by the above method was used in Example 1, to give PPS. PPS had a molecular weight, as η$_{inh}$, of 0.22, and as residual salts, it contained 8 ppm of Li and 80 ppm of Na.

[Comparative Example 1]

<Method of reproducing Li$_2$S>

An LiCl solution [A] (contents: LiCl 12 % by weight, NMP 88 % by weight) was prepared from a recovery solution that was from the production of PPS from $Li_2S$ and PDCB. To 422 kg (Li 1.19 kmol) of the above LiCl solution (A) was added 48 % by weight of an NaOH aqueous solution in an amount of 99 kg (Na 1.19 kmol) at room temperature, and the mixture was maintained for 1 hour to give a slurry containing LiOH and NaCl as a solid content.

The above slurry was separated into a solid and a liquid with a centrifugal separator (P-660, supplied by Tomoe Engineering Co., Ltd.), whereby LiOH and NaCl were separated as a solid content. 100 Kilograms of NMP was added thereto to form a slurry, and then 23 kg of $H_2S$ was blown into the system in the form of a gas, to convert LiOH to LiSH. This LiSH-containing mixture was centrifugally separated at 100°C, to separate it into 180 kg of an LiSH separation liquid [D] and a solid containing NaCl as a main component. The LiSH separation liquid [D] was measured for an NaCl content therein, to show 0.20 kg per kilogram of LiSH. The LiSH separation liquid was heated up to 205°C, and subjected to a dehydrating-desulfurizing reaction at 205°C for 4 hours, to give 160 kg of a slurry [E] containing $Li_2S$ as a main component. The slurry [E] contained 0.4 kmol of $Li_2S$, 0.06 kmol of lithium N-methylaminobutyrate and 0.118 kmol of NaCl.

As a result, the slurry [E] contained 0.15 mol of NaCl per mole of $Li_2S$.

<Polymerization-washing>

A 10-L autoclave was charged with 4,000 g (equivalent to 10 mol as $Li_2S$) of the slurry prepared by the above method, 10 mol (1,470 g) of PDCB, 6 mol (108.1 g) of water and 800 g of NMP, and the mixture was allowed to react at 260°C for 3 hours. The reaction mixture was cooled to 100°C, and a liquid phase was separated to give a polymer <V> as a precipitate.

A 10-L autoclave reactor was charged again with the thus-obtained polymer, 4,000 g of NMP and 13.1 g (0.2 mol) of $NH_4Cl$, and the mixture was temperature-increased up to 260°C, followed by washing for 30 minutes. The reaction product was cooled to 100°C, and a liquid phase was separated to give a polymer <VI> as a precipitate. Then, the polymer <VI> was similarly washed once without adding $NH_4Cl$, to give a polymer <VII>.

The polymer <VII> was vacuum-dried to give 970 g of PPS. PPS had a molecular weight, as $\eta_{inh}$, of 0.21, and as residual salts, it contained 10 ppm of Li and 120 ppm of Na.

[Example 3]

<Method of reproducing $Li_2S$>

An LiCl solution [A] (contents: LiCl 12 % by weight, NMP 88 % by weight) was prepared from a recovery solution that was from the production of PPS from $Li_2S$ and PDCB, in the same manner as in Example 1.

A 15-L autoclave was charged with 10 kg (28.20 mol as LiCl) of the above LiCl solution [A], and the solution was concentrated under heat at a reduced pressure of 200 torr. As a result, 8.5 kg of a distillate containing NMP as a main component was distilled off.

A residue remaining in the autoclave was taken out, and 27 kg of water was added thereto, followed by stirring at 50°C to dissolve the residue. A solid content was removed by filtering, to give an LiCl aqueous solution [F] (contents: LiCl 4.2 wt%, NMP 1 wt%, water 94.8 wt%). The LiCl aqueous solution [F] was subjected to electrolysis in an electrolyzer with an acryl vessel having a liquid volume of 1 liter shown in Fig. 1.

In the electrolysis, an acryl vessel 8 where a platinum plate (cathode electrode) 1 and a platinum plate (anode electrode) 2 were partitioned with a proton separation membrane 7 was charged with 1 liter of the LiCl aqueous solution [F]. While a current of 6A was allowed to flow in the platinum plates 1 and 2 at a potential difference of 10 V, and while the LiCl aqueous solution [F] was supplied from a raw material solution feed inlet 3 at a rate of 100 ml/hour, an LiOH aqueous solution [G] was withdrawn from a formed-solution withdrawing outlet 4 at an amount rate equivalent to the feed rate through the feed inlet 3.

The above electrolysis was carried out while nitrogen gas was introduced through a nitrogen gas feed inlet 5. Further, chlorine gas generated by the electrolysis was discharged through a discharge gas withdrawing outlet 6 together with the nitrogen gas introduced.

According to an ion chromatograph, the LiOH aqueous solution [G] was found to have contents; LiOH: 2.3 % by weight and LiCl: 0.2 % by weight.

1 Kilogram of NMP at 100°C was added to 750 g of a residue obtained by evaporating water from 6 kg of the LiOH aqueous solution [G], which was obtained by the above method, under vacuum at 120°C. The mixture was stirred and filtered, and the thus-obtained solid was washed with 500 g of NMP at 100°C to give 220 g of a solid.

To the solid obtained by the above method was added 1,000 g of NMP to prepare a slurry [H]. According to an ion chromatograph, the slurry [H] was found to have contents; LiOH: 11 % by weight, NMP: 89 % by weight and LiCl whose content was 0.1 % by weight or less.

Hydrogen sulfide was blown into the above slurry [H] at 130°C at a rate of 2 L/minute for 5 hours and 30 minutes, to effect a conversion to LiSH. Then, the mixture was heated up to 205°C and subjected to a dehydrating and desulfurizing reaction at 205°C for 4 hours, to give 850 g of a slurry [I] containing $Li_2S$ as a main component. The slurry [I] contained 2.7 mol of $Li_2S$ and 0.14 mol of lithium N-methylaminobutyrate. In the slurry [I], no Na ion was detected.

<Polymerization-washing>

A 1-L autoclave was charged with 157.5 g (equivalent to 0.5 mol as $Li_2S$) of the slurry [I] prepared by the above method, 0.5 mol (73.51 g) of PDCB, 0.3 mol (5.4 g) of water and 80 g of NMP, and the mixture was allowed to react at 260°C for 3 hours. The reaction mixture was cooled to 100°C, and a liquid phase was separated to give a polymer as a precipitate. A 1-L autoclave was charged again with the thus-obtained polymer, 200 g of NMP, 50 g of water and 0.655 g (0.01 mol) of $NH_4Cl$, and the mixture was temperature-increased up to 260°C and washed for 30 minutes. The washed mixture was cooled to 100°C, and a liquid phase was separated to give a polymer as a precipitate. The obtained polymer was similarly washed twice without adding $NH_4Cl$. The finally obtained polymer weighed 45 g, and it had a molecular weight, as $\eta_{inh}$, of 0.28 and had an Li content of 10 ppm or less and no Na content.

Industrial Utility

According to the present invention, there can be provided a method for reproducing lithium sulfide having a less Na content from a lithium halide generated as a byproduct during the production of a polyarylene sulfide and a method for producing a polyarylene sulfide in the presence of the above reproduced lithium sulfide.

**Claims**

1. A method for reproducing lithium sulfide, which comprises the steps of
   reacting lithium halide generated as a byproduct during the production of a polyarylene sulfide by a reaction between lithium sulfide and a halogenated aromatic compound, with sodium carbonate to generate lithium carbonate,
   isolating said lithium carbonate, and
   reacting said lithium carbonate with a sulfur compound to generate the lithium sulfide.

2. A method for reproducing lithium sulfide, which comprises the steps of
   electrolyzing lithium halide generated as a byproduct during the production of a polyarylene sulfide by a reaction between lithium sulfide and a halogenated aromatic compound, to generate lithium hydroxide, and
   reacting said lithium hydroxide with a sulfur compound to generate the lithium sulfide.

3. The method for reproducing lithium sulfide as recited in claim 1, wherein said reproduced lithium sulfide has an included-Na content of 0.13 mol or less per mole of sulfur.

4. The method for reproducing lithium sulfide as recited in claim 2, wherein said reproduced lithium sulfide has an included-Na content of 0.13 mol or less per mole of sulfur.

5. A method for producing a polyarylene sulfide by a reaction between lithium sulfide and a halogenated aromatic compound, which comprises the step of reacting a reproduced lithium sulfide obtained by the reproduction method recited in any one of claims 1 to 4 with a halogenated aromatic compound.

6. A reproduced lithium sulfide having an included Na content of 0.13 mol or less per mole of sulfur, which is a product reproduced from lithium halide generated as a byproduct during the production of a polyarylene sulfide by a reaction between lithium sulfide and a halogenated aromatic compound.

Fig. 1

# EP 1 460 039 A1

## INTERNATIONAL SEARCH REPORT

International application No.

PCT/JP02/13177

### A. CLASSIFICATION OF SUBJECT MATTER
Int.Cl$^7$ C01B17/22, C25B1/16, C08G75/02

According to International Patent Classification (IPC) or to both national classification and IPC

### B. FIELDS SEARCHED

Minimum documentation searched (classification system followed by classification symbols)
Int.Cl$^7$ C01B17/22, C25B1/16, C08G75/02, C01D15/02

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | US 4126666 A (Foote Mineral Co.),<br>21 November, 1978 (21.11.78),<br>Claims; examples 1 to 3<br>(Family: none) | 6<br>1,3,5 |
| A | JP 10-130005 A (Idemitsu Petrochemical Co., Ltd.),<br>19 May, 1998 (19.05.98),<br>Claims; Par. No. [0044]; examples<br>(Family: none) | 1-6 |
| A | US 4451643 A (Phillips Petroleum Co.),<br>29 May, 1984 (29.05.84),<br>Claims; column 4, lines 10 to 13<br>(Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>27 March, 2003 (27.03.03) | Date of mailing of the international search report<br>08 April, 2003 (08.04.03) |
|---|---|
| Name and mailing address of the ISA/<br>Japanese Patent Office | Authorized officer |
| Facsimile No. | Telephone No. |

Form PCT/ISA/210 (second sheet) (July 1998)

12

# EP 1 460 039 A1

## INTERNATIONAL SEARCH REPORT

| | International application No. |
|---|---|
| | PCT/JP02/13177 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 7-197285 A (Veitsiluoto Oy), 01 August, 1995 (01.08.95), Claims; examples & EP 560316 A    & US 5651875 A | 2 |

Form PCT/ISA/210 (continuation of second sheet) (July 1998)

13